(19) Europäisches Patentamt
European Patent Office
Office européen des brevets

(11) **EP 1 071 247 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
*H04L 25/02* (2006.01)

(21) Anmeldenummer: **00112827.1**

(22) Anmeldetag: **17.06.2000**

(54) **Kanalschätzung**

Channel estimation

Estimation de canal

(84) Benannte Vertragsstaaten:
**DE GB IT SE**

(30) Priorität: **22.07.1999 DE 19934355**

(43) Veröffentlichungstag der Anmeldung:
**24.01.2001 Patentblatt 2001/04**

(73) Patentinhaber: **ROBERT BOSCH GMBH**
**70442 Stuttgart (DE)**

(72) Erfinder:
• **Kowalewski, Frank**
**38228 Salzgitter (DE)**
• **Mangold, Peter**
**30173 Hannover (DE)**

(56) Entgegenhaltungen:
**DE-A- 19 703 060     DE-C- 19 614 543**

**Beschreibung**

Stand der Technik

Die Erfindung geht aus von einem Verfahren zum Empfang von Funksignalen beziehungsweise von einer Vorrichtung zum Empfang von Funksignalen über Funkkanäle, nach der Gattung der unabhängigen Patentansprüche.

In P. Jung: "Analyse und Entwurf digitaler Mobilfunksysteme", B. G. Teubner, Stuttgart, 1997, Seite 175 bis 176 wird bereits darüber berichtet, daß einem Empfänger bekannte Trainingsfolgen über Funkkanäle gesendet werden, mittels derer der Empfänger die Übertragungseigenschaften des Funkkanals ermittelt und damit eine Kanalschätzung durchführt. Neben den Trainingsfolgen werden Nutzdatensignale übertragen, die mittels der geschätzten Übertragungseigenschaften rekonstruiert werden. Die maximale Länge der Impulsantwort des Funkkanals, bedingt durch Mehrwegeausbreitung, bestimmt dabei die zeitliche Länge der Trainingsfolge.

De 197 03 060 beschreibt ein Verfahren zur Kanalschätzung mit einen Anpassung eines Kanalmodells während einer Datendetektion.

Vorteile der Erfindung

Das erfindungsgemäße Verfahren beziehungsweise die erfindungsgemäße Vorrichtung mit den Merkmalen der - unabhängigen Patentansprüche haben demgegenüber den Vorteil, daß allein aus dem Betrag der Impulsantwort des Funkkanals abgeschätzt wird, welche zeitliche Länge der Trainingsfolge benutzt wird, um eine optimale Schätzung der Übertragungseigenschaften des Funkkanals durchzuführen. Dabei werden die geringen Betragswerte der Impulsantwort, die zunächst eine maximal vorgegebene zeitliche Länge aufweist, des Funkkanals nicht berücksichtigt, so daß die Nachentzerrung der empfangenen Funksignale zu einer optimalen Signalrekonstruktion führt.

Darüber hinaus ist es von Vorteil, daß mittels eines Verfahrens beziehungsweise einer Vorrichtung der Erfindung zunächst nur die Betragswerte der Impulsantwort des Funkkanals ermittelt werden und später, nachdem die niedrigen Betragswerte eliminiert wurden, die vollständigen Übertragungseigenschaften bestimmt werden. Dabei wird für die erste Bestimmung der Betragswerte der Impulsantwort des Funkkanals ein einfaches Verfahren, insbesondere ein signalangepaßtes Filter, eingesetzt, während für die zweite Bestimmung der Übertragungseigenschaften ein genaueres Verfahren, insbesondere ein Gaußsches Schätzverfahren, verwendet wird. Dies hat den Vorteil, daß der Aufwand im Empfänger minimiert wird, weil nur für die tatsächlich verwendete zeitliche Länge der Signale der Trainingsfolge das genauere Verfahren verwendet wird.

Weiterhin ist von Vorteil, daß die aufeinander folgende Bestimmung der Betragswerte der Impulsantwort des Funkkanals dazu benutzt wird, die Betragswerte zu mitteln, damit einzelne stark abweichende Betragswerte nur gering ins Gewicht fallen.

Durch die in den abhängigen Ansprüchen aufgeführten Maßnahmen sind vorteilhafte Weiterbildungen und Verbesserungen der in den unabhängigen Ansprüchen angegebenen Verfahren und Vorrichtungen möglich.

Es ist von Vorteil, daß die Trainingsfolgen so schnell wiederholt werden, daß eine Funkkanalschätzung und damit eine Nachentzerrung für eine maximale, vorgegebene Änderungsgeschwindigkeit der Übertragungseigenschaften gewährleistet ist.

Besonders vorteilhaft ist, daß die erfindungsgemäße Vorrichtung sowohl als Mobilstation als auch als Basisstation verwendet wird.

Zeichnung

Ausführungsbeispiele der Erfindung sind in der Zeichnung dargestellt und in der nachfolgenden Beschreibung näher erläutert. Es zeigen

Figur 1 einen Empfänger, wobei der Längenschätzer einen einfachen Kanalschätzer aufweist, und
Figur 2 einen Empfänger mit Längenschätzer.

Beschreibung der Ausführungsbeispiele

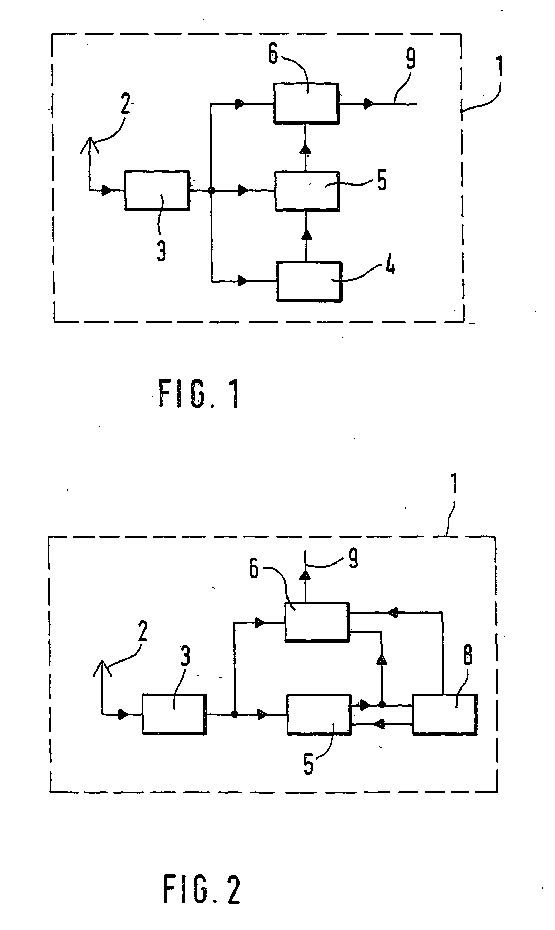

In Figur 1 ist ein Empfänger 1 dargestellt, bei dem eine Antenne 2 mit einem Hochfrequenzempfangsteil 3 über eine Leitung verbunden ist. Das Hochfrequenzempfangsteil 3 ist über seinen Datenausgang an einen einfachen Kanal- und Längenschätzer 4, an einen ersten Dateneingang eines Kanalschätzers 5 und an den ersten Dateneingang des Datendetektors 6 angeschlossen. Der Kanal- und Längenschätzer 4 ist über seinen Datenausgang an einen zweiten Dateneingang des Kanalschätzers 5 angeschlossen. Der Kanalschätzer 5 ist über seinen Datenausgang an einen zweiten Dateneingang des Datendetektors 6 angeschlossen. Am Ausgang 9 des Datendetektors 6 liegen die detektierten Nutzdaten vor.

Aufgrund von Gebäuden, der Landschaft und Fahrzeugen werden die Funksignale aufgrund der örtlichen Gegebenheiten reflektiert und gestreut, so daß sich mehrere Wege für das Funksignal von einem Sender zum Empfänger ergeben. Dieses Phänomen wird mit Mehrwegeausbreitung beschrieben und führt dazu, daß unterschiedliche Teile der Funksignale eines Senders mit unterschiedlichen Verzögerungszeiten am Empfänger ankommen, so daß sich die Funksignale des Senders am Empfänger überlagern, und es damit zur sogenannten Intersymbolinterferenz und zu einem Signalschwund kommt.

Darüber hinaus kann sich die Phasenlage der Funksignale zueinander durch zum Beispiel die Länge der Ausbreitungspfade ändern. Ein Pfad ist beispielsweise 10mal so lang wie die Wellenlänge des Funksignals, während ein anderer Pfad 12,5mal so lang ist. Signale über den zuletzt genannten Pfad weisen einen Phasenverschiebung im Vergleich zu dem zuerst genannten Pfad auf. Diese Phasenverschiebung, die damit auch von der Mehrwegeausbreitung herrührt, führt zu einem Signalschwund.

Des weiteren werden die Funksignale in Abhängigkeit von dem Weg, den sie vom Sender zum Empfänger zurücklegen, unterschiedlich gedämpft. Die Dämpfung, die Verzögerungszeiten und die Phasenverschiebungen bestimmen die Übertragungseigenschaften eines Funkkanals.

Man erhält am Empfänger ein Signal, das durch alle diese Effekte gleichzeitig beeinflußt wurde. Die Kanalentzerrung wird daher auch die Gesamtheit der Übertragungseigenschaften des Funkkanals kompensieren.

Um Funksignale im Empfänger wieder rekonstruieren zu können, ist es hilfreich, die Übertragungseigenschaften des Funkkanals dabei zu berücksichtigen, weil die Funksignale durch die Übertragungseigenschaften des Funkkanals verändert wurden. Diese Veränderung gilt es rückgängig zu machen. Um dies zu erreichen, werden sogenannte Trainingsfolgen zusammen mit den Nutzdatensignalen, wie Sprach- und Datensignalen, gesendet. Darüber hinaus werden auch Synchronisationssignale gesendet, mit denen der Empfänger mit üblichen Synchronisationsmethoden den Beginn der Trainingsfolgen und Nutzdatensignalen erkennt.

Die Trainingsfolgen sind in ihrer ursprünglichen Form, wie sie gesendet wurden, im Empfänger abgespeichert, so daß durch einen Vergleich der empfangenen und der abgespeicherten Trainingsfolgen die Veränderungen, die durch die Übertragungseigenschaften des Funkkanals hervorgerufen wurden, ermittelt werden. Durch diesen Vergleich erhält man damit eine Schätzung der Übertragungseigenschaften des Funkkanals. Mathematisch und praktisch wird dies im einfachsten Fall mit einem üblichen Verfahren der Autokorrelation durchgeführt. Das Ergebnis der Autokorrelation liefert die Kanalschätzung der vollständigen Übertragungseigenschaften. Die Autokorrelation ist eine Technik, wobei in eine Autokorrelationseinheit als Eingabedaten das empfangene Signal und das abgespeicherte ursprüngliche Signal eingegeben werden. Am Ausgang der Autokorrelationseinheit erhält man ein Signal, das die Änderungen, die das empfangene Signal in Abhängigkeit von den Übertragungseigenschaften des Funkkanals erfahren hat, widerspiegelt.

Ein sehr einfaches Verfahren, das die Autokorrelation beinhaltet, ist das bekannte Verfahren der signalangepaßten Filterung. Dabei wird zur Kanalschätzung das Empfangssignal auf ein Filter gegeben, dessen Impulsantwort mit einer beliebigen Konstante proportional zum zeitinversen konjugiert komplexen Signal der Trainingsfolge ist. Durch Verändern der Konstanten und einer Autokorrelation des empfangenen Signals mit der Impulsantwort des Filters wird die Kanalimpulsantwort abgeschätzt.

Bekannte komplexere Verfahren weisen neben der Autokorrelation noch eine Filterung auf, um genauere Schätzungen der Kanalimpulsantwort zu liefern. Dazu gehört zum Beispiel das bekannte Gaußsche Verfahren.

Die Trainingsfolgen bestehen aus Signalen, die eine bestimmte Breite haben und die unterschiedliche Amplituden aufweisen, zum Beispiel 1 und -1. Der minimale Abstand zwischen zwei Trainingsfolgen ist durch die maximal zulässige Änderungsgeschwindigkeit für die Übertragungseigenschaften des Funkkanals bestimmt. Die maximale Änderungsgeschwindigkeit ist bei UMTS zum Beispiel 500 km/h. Damit ist gewährleistet, daß immer eine Kanalschätzung und eine Nachentzerrung der empfangenen Signale durchgeführt werden kann.

Die Länge der Trainingsfolge ist durch die maximal angenommene Länge der Kanalimpulsantwort bestimmt, so daß die Kanalimpulsantwort immer bestimmt werden kann.

Mathematisch verfügt man im Zeitbereich über eine Kanalimpulsantwort, wenn man die Übertragungseigenschaften des Funkkanals durch Autokorrelation bestimmt hat. Die Kanalimpulsantwort gibt an, wie ein ideal kurzer Impuls über der Zeit aufgrund von Mehrwegeausbreitung gedehnt und phasenverschoben wird und wie er dabei gedämpft wird. Die Kanalimpulsantwort verknüpft mathematisch das gesendete Funksignal durch die lineare Faltungsoperation mit dem empfangenen Funksignal.

Die Kanalimpulsantwort bei einem Mobilfunkkanal hat in Abhängigkeit von der Zeit unterschiedliche zeitliche Längen. Diese unterschiedlichen zeitlichen Längen sind im wesentlichen durch die Mehrwegeausbreitung und damit durch die unterschiedlichen Verzögerungszeiten bestimmt. Ist eine tatsächliche Länge einer Kanalimpulsantwort kürzer als die von einem Empfänger angenommene, dann gehen in die Kanalschätzung im Empfänger Betragswerte ein, die nicht zur Kanalimpulsantwort gehören. Damit wird es zu einer fehlerhaften Entzerrung der empfangenen Signale kommen, da die Kanalimpulsantwort bekanntermaßen zur Nachentzerrung verwendet wird.

Für die Abschätzung der zeitlichen Länge einer Kanalimpulsantwort werden die Betragskomponenten der Kanalimpulsantwort, die zeitlichen Abschnitten der Kanalimpulsantwort zuzuordnen sind, mit einem Schwellenwert verglichen, da es zu erwarten ist, daß die Komponenten, die nicht zur eigentlichen Kanalimpulsantwort gehören, einen sehr geringen Betrag aufweisen. Über eine Schwellenwertoperation werden die Komponenten, die zur Kanalimpulsantwort gehören, ausgewählt.

Die mit der Antenne 2 empfangenen Funksignale werden im Hochfrequenzempfangsteil 3 demoduliert, umgesetzt, verstärkt und digitalisiert, so daß ein Datensignal vorliegt. Dieses Datensignal geht vom Datenausgang des Hochfrequenzempfangsteils 3 an den Kanal- und Längenschätzer 4, an den Kanalschätzer 5 und an den Datendetektor 6. Der Kanalschätzer 5 und der Datendetektor 6 speichern die Datensignale zwischen.

Der Kanal- und Längenschätzer 4 verfügt über die abgespeicherte Trainingsfolge und darüber hinaus über abgespeicherte Synchronisationssignale, so daß er zunächst durch Synchronisation die empfangene Trainingsfolge findet und in einem weiteren Schritt die Amplituden der empfangenen Trainingsfolge und der abgespeicherten Trainingsfolge vergleicht und damit die Betragswerte der Impulsantwort des Funkkanals ermittelt.

Die Betragswerte der Impulsantwort des Funkkanals werden dann mit dem vorgegebenen Schwellenwert verglichen. Es werden dabei die Betragswerte verworfen, die unter diesem Schwellenwert liegen. Damit werden zu niedrige Betragswerte ausgeschlossen, so daß später, bei der Signalrekonstruktion nicht die sehr niedrigen Signalpegel der empfangenen Nutzdatensignale berücksichtigt werden müssen. Die Signalpegel sind nach der Verstärkung in dem Hochfrequenzempfangsteil 3 nicht mehr niedrig, aber, wenn sie vor der Verstärkung sehr niedrig waren, sind diese Signale vom Rauschen bestimmt und liefern daher stark fehlerbehaftete Datendetektionsergebnisse.

Durch eine Mittelung über mehrere Schätzungen der Betragwerte der Impulsantwort des Funkkanals werden einzelne, stark abweichende Betragswerte nicht stark ins Gewicht fallen. Um eine Mittelung vornehmen zu können, werden aufeinander folgende Schätzungen im Kanal- und Längenschätzer 4 abgespeichert.

Es werden jedoch nur die niedrigen Betragswerte am zeitlichen Ende der zunächst geschätzten Kanalimpulsantwort verworfen. Das heißt, niedrige Betragswerte, die innerhalb der Kanalimpulsantwort vorkommen, worauf also wieder höhere Betragswerte folgen, werden nicht verworfen, sondern allein jene, die am zeitlichen Ende der zunächst geschätzten Kanalimpulsantwort liegen.

Der Zweck des Verfahrens ist, daß die als zu lang angenommene Kanalimpulsantwort verkürzt wird, so daß eine bessere Schätzung der Kanalimpulsantwort und damit eine bessere Entzerrung der empfangenen Signale ermöglicht wird.

Die verkürzte zeitliche Länge der Kanalimpulsantwort wird dem Kanalschätzer 5 als Datum übergeben. Das heißt, der Kanalschätzer 5 verfügt nun über die Information, welchen Anteil der empfangenen Trainingsfolge er zur Kanalschätzung verwenden muß.

Mittels der abgespeicherten Synchronisationssignale erkennt der Kanalschätzer 5 aus dem zwischengespeicherten Datensignal die empfangene Trainingsfolge und führt durch das bekannte Gaußsche Verfahren zur Kanalschätzung von der empfangenen Trainingsfolge und der abgespeicherten Trainingsfolge eine Kanalschätzung der Übertragungseigenschaften des Funkkanals durch. Diese Funkkanalschätzung wird dem Datendetektor 6 als Datenstrom übergeben, so daß der Datendetektor 6 damit die zwischengespeicherten Nutzdatensignale entzerrt. Die Nutzdatensignale hat der Datendetektor 6 mittels der Synchronisationssignale aus dem von dem Hochfrequenzempfangsteil 3 empfangenen Datenstrom erkannt. Die Nutzdatensignale werden so entzerrt, daß die im Hochfrequenzempfangsteil 3 verstärkten Signale entsprechend gedämpft werden, das heißt eine hohe Dämpfung durch den Funkkanal führt zu einer geringen Dämpfung im Datendetektor während der Entzerrung, so daß die Verstärkung im Hochfrequenzempfangsteil 3 und die Dämpfung im Datendetektor 6 die Dämpfung durch den Funkkanal ausgleichen. Die Phase wird durch eine Phasenentzerrung korrigiert. Das heißt, daß nach der Phasenentzerrung die Datensignale keine Veränderungen im Vergleich zum ursprünglich gesendeten Datensignal mehr aufweisen. Die Entzerrung ist ein Vorgang, bei dem in einem Schritt die vollständigen Übertragungseigenschaften des Funkkanals kompensiert werden.

Der Kanal- und Längenschätzer 4 und der Kanalschätzer 5 sind jeweils auf einem Signalprozessor implementiert. Die Besonderheit ist, daß die Schätzung der Dämpfung des Funkkanals im Kanal- und Längenschätzer 4 durch einen üblichen, einfachen Algorithmus für ein signalangepaßtes Filter vorgenommen wird, während im Kanalschätzer 5 die komplexere und zu genaueren Ergebnissen führende Gaußsche Schätzung der Übertragungseigenschaften des Funkkanals eingesetzt wird.

Im Extremfall, wenn eine Sichtverbindung zwischen Sender und Empfänger bei der Funkverbindung vorliegt, werden die Übertragungseigenschaften des Funkkanals durch diese Sichtverbindung dominiert und alle anderen, die durch Mehrwegeausbreitung hervorgerufen sind, werden keine Rolle spielen.

Der in Figur 2 als Blockschaltbild dargestellte Empfänger, weist im Vergleich zu dem in Figur 1 beschriebenen Empfänger einen Längenschätzer 8 ohne Kanalschätzer auf. Eine Antenne 2 ist mit einem Hochfrequenzempfangsteil 3 verbunden. Das Hochfrequenzempfangsteil 3 ist über seinen Datenausgang an einen Kanalschätzer 5 und an einen ersten Dateneingang eines Datendetektors 6 angeschlossen. Der Kanalschätzer 5 ist über seinen Datenausgang mit dem Längenschätzer 8 und mit einem zweiten Dateneingang des Datendetektors 6 verbunden. Ein erster Datenausgang des Längenschätzers 8 führt zu einem zweiten Dateneingang des Kanalschätzers 5. Ein zweiter Datenausgang des Längenschätzers 8 führt zu einem dritten Dateneingang des Datendetektors 6. Am Ausgang 9 des Datendetektors 6 liegen die detektierten Nutzdaten vor.

Die über die Antenne 2 empfangenen Funksignale gelangen zunächst in den Hochfrequenzempfangsteil 3, wo sie verstärkt, umgesetzt und digitalisiert werden. Von dem ersten Datenausgang des Hochfrequenzempfangsteils 3 werden die so entstandenen Datensignale als Datenstrom dem Kanalschätzer 5 übergeben. Über den zweiten Datenausgang des Hochfrequenzempfangsteils 3 gelangen die Datensignale zum ersten Dateneingang des Datendetektors 6. Im Datendetektor 6 werden die Datensignale zwischengespeichert.

Der Kanalschätzer 5 führt die oben beschriebene Schätzung der Übertragungseigenschaften mit einem signalangepaßten Filter-Algorithmus durch, nachdem die Trainingsfolge im Datenstrom mittels Synchronisationssignalen erkannt worden war. Hiermit wird eine erste grobe Kanalschätzung durchgeführt. Auch hier wird eine Mittelung durchgeführt, indem über mehrere Schätzungen gemittelt wird, wobei aufeinander folgende Schätzungen abgespeichert werden.

Der Kanalschätzer 5 übergibt über seinen ersten Datenausgang die Betragswerte der Kanalimpulsantwort dem Längenschätzer 8. Über den zweiten Datenausgang des Kanalschätzers 5 gelangen die Daten über die Übertragungseigenschaften zum dem zweiten Dateneingang des Datendetektors 6. Diese Daten werden vom Datendetektor 6 allerdings nicht gespeichert, da vom Längenschätzer 8 noch nicht signalisiert wurde, daß die Längenschätzung der Kanalimpulsantwort durchgeführt wurde.

Der Längenschätzer 8 führt den oben beschriebenen Vergleich der ermittelten Betragswerte mit dem Schwellenwert durch und übergibt die Zahl der Betragswerte, die nicht verworfen wurden, dem Kanalschätzer 5 über seinen ersten Datenausgang. Der Kanalschätzer 5 führt nun eine genauere Kanalschätzung mit dem Gaußschen Schätzverfahren für die richtige Länge der Impulsantwort durch.

Der Längenschätzer 8 übergibt über seinen zweiten Datenausgang an den dritten Dateneingang des Datendetektors 6 die Information, daß die Längenschätzung durchgeführt wurde und die vom Kanalschätzer 5 kommende Schätzung der Impulsantwort zur Entzerrung verwendet werden kann.

Der Datendetektor 6 entzerrt die abgespeicherten Nutzdaten mittels der vom Kanalschätzer 5 kommenden Schätzung der Impulsantwort des Funkkanals. Der Kanalschätzer 5 und der Längenschätzer 8 sind auf Prozessoren implementiert.

Die Empfänger, die in den Figuren 1 und 2 dargestellt sind, sind beide sowohl in Basisstationen und in Mobilstationen einsetzbar.

Das vorgestellte Verfahren ist unabhängig von der Modulationsart, das heißt, alle heute verwendeten Mobilfunksysteme, wie zum Beispiel GSM, oder auch zukünftig geplante Mobilfunksysteme, wie UMTS, erfahren die genannten Vorteile mit dieser Erfindung. Denn all diesen Übertragungssystemen ist eigen, daß eine Kanalschätzung vorgenommen werden muß, um den sich ändernden Übertragungseigenschaften der Funkkanäle Rechnung zu tragen.

Daher ist eine Optimierung der Funkkanalschätzung als auch des Aufwandes hierfür notwendig. Es wird die kohärente Detektion mit pilotgestützter Kanalschätzung betrachtet. Die Daten- und Pilotsymbole, die die Symbole der Trainingsfolge sind, werden in Rahmen zusammengefaßt und sequentiell übertragen. Zur Nutzertrennung wird das CDMA (Code Division Multiple Access) Verfahren für die Daten benutzt.

Der Längenschätzer 5 aus Fig. 1 ermittelt einen Schätzwert $m$ für die momentane Länge der Kanalimpulsantwort mit Hilfe der Symbole der Trainingsfolge des aktuellen und ($k$-1) voriger empfangener Rahmen. Für jeden Rahmen wird durch signalangepasste Filterung eine Augenblicksschätzung der Impulsantwort des Funkkanals berechnet. Die $k$ berechneten Impulsantworten werden linear gemittelt und das Ergebnis einer Schwellwertoperation mit Schwelle $\eta$ unterzogen. Die Länge des Ergebnisses dieser Schwellwertoperation ist der gesuchte Schätzwert $m$. Die Symbole der Trainingsfolge des i-ten Rahmens sind gegeben durch

$$\underline{r}^{(i)} = \left( r_1^{(i)}, \ldots, r_L^{(i)} \right). \tag{1}$$

Die Impulsantwort des Kanals bei maximaler Länge W sei

$$\underline{h}^{(i)} = \left( h_1^{(i)}, \ldots, h_W^{(i)} \right). \tag{2}$$

Die empfangenen Symbole der Trainingsfolge

$$\underline{e}^{(i)} = \left( e_1^{(i)}, \ldots, e_{L+W-1}^{Ti)} \right) \tag{3}$$

ergeben sich, mit additiver Störung $\underline{n}_i$ und Vernachlässigung von Randeffekten von benachbarten Signalen, zu

$$\underline{e}^{(i)} = \underline{r}^{(i)} * \underline{h}^{(i)} + \underline{n}^{(i)} . \qquad (4)$$

Die Kanalkoeffizienten $\underline{h}^{(i)}$ werden durch das $\underline{r}^{(i)}$ entsprechende signalangepasste Filter $r^*_{-k}$ (in nicht kausaler Schreibweise) geschätzt zu $\underline{h}^{(i)}$. Dabei wird $\underline{e}^{(i)}$ verkürzt zu

$$\underline{e}'^{(i)} = (e_W{}^{(i)}, \ldots, e_{L+W-1}{}^{(i)}) . \qquad (5)$$

Es folgt

$$\hat{\underline{h}}^{(i)} = \frac{1}{\gamma} \cdot G_i^{*T} \cdot \underline{e}'^{(i)} \qquad (6)$$

mit

$$G^{(i)} = \begin{pmatrix} r_W & r_{W-1} & \cdots & r_1 \\ r_{W+1} & r_W & & r_2 \\ \vdots & \vdots & & \vdots \\ r_L & r_{L-1} & \cdots & r_{L-W} \end{pmatrix}_i , \qquad (7)$$

$$\gamma = \left\| \underline{r}^{(i)} \right\|^2 . \qquad (8)$$

$\gamma$ bezeichnet die Norm. Die lineare Mittelung über k Rahmen ergibt

$$\hat{\underline{h}} = \frac{1}{k} \cdot \sum_{i=1}^{k} \hat{\underline{h}}^{(i)} . \qquad (9)$$

Nach der Schwellwertoperation folgt

$$\left| \hat{h}'_n \right| = \begin{cases} \left| \hat{h}_n \right| & f\ddot{u}r & \left| \hat{h}_n \right| > \eta \\ 0 & f\ddot{u}r & \left| \hat{h}_n \right| \leq \eta \end{cases} . \qquad (10)$$

Die gesuchte tatsächliche momentane Länge der Kanalimpulsantwort m ergibt sich durch

$$m = max \left\{ n : \left| \hat{h}'_n \right| > 0 \right. \qquad (11)$$

Der Schätzwert m wird zur Anpassung der Kanalschätzung an die momentanen Verhältnisse benutzt. Die Kanalschätzung erfolgt durch das Gaußsche Schätzverfahren mit Hilfe der Symbole der Trainingsfolge des aktuellen Rahmens. Dabei wird die Berechnung nur für eine Impulsantwort der Länge W' = m durchgeführt. *G* und *e* werden entsprechend nach (5) und (7) bestimmt.

$$\hat{\underline{h}} = (G^{*T} \cdot G)^{-1} \cdot G^{*T} \cdot \underline{e} \qquad (12)$$

Der Schätzwert $m$ wird ferner zur Anpassung der Datendetektion benutzt. Die Detektion erfolgt mit Hilfe eines für CDMA-Verfahren üblichen RAKE-Empfängers. Durch die Abbildung

$$l = f(m) = \lceil \alpha \cdot m \rceil \qquad (13)$$

wird die Anzahl n=1 der RAKE-Finger (Korrelationspfade) in Abhängigkeit der Schätzwertes $m$ bestimmt und so die Detektor-Komplexität an den momentanen Kanalzustand angepasst. $\alpha$ beschreibt das optimale Verhältnis der Anzahl von RAKE-Fingern zur momentanen Länge der Kanalimpulsantwort. Die $l$ Kanalkoeffizienten und deren relative Verzögerungen werden aus den m Werten der geschätzten Kanalimpulsantwort so ausgewählt, daß deren Energie maximal ist.

**Patentansprüche**

1. Verfahren zum Empfang von Funksignalen über einen Funkkanal, wobei die Funksignale durch Dämpfung, Verzögerungszeiten und Phasenverschiebung des Funkkanals verändert werden, wobei die Funksignale Trainingsfolgen, Synchronisationssignale und Nutzdatensignale aufweisen, wobei die Synchronisationssignale dazu dienen, den Beginn der Trainingsfolgen und Nutzdatensignale zu erkennen, wobei durch einen Vergleich von empfangenen Trainingsfolgen mit abgespeicherten Trainingsfolgen die Übertragungseigenschaften des Funkkanals ermittelt werden, **gekennzeichnet durch** folgende Schritte:

   - **durch** einen ersten Vergleich, insbesondere mittels eines signalangepaßten Filters, wobei das empfangene Signal mit einem abgespeicherten Signal verglichen wird, der Trainingsfolgen wird eine Anzahl der Betragswerte der Kanalimpulsantwort ermittelt, wobei die Anzahl **durch** eine vorgegebene maximale Länge der Kanalimpulsantwort vorgegeben ist,
   - die Betragswerte werden über mehrere Vergleiche hinweg gemittelt
   - die Betragswerte der Kanalimpulsantwort werden mit einem vorgegebenen Schwellenwert für den Betrag verglichen und die Betragswerte, die unter dem Schwellenwert liegen und die am zeitlichen Ende der Kanalimpulsantwort liegen und die aufeinanderfolgen und auf die kein Betragswert folgt, der über dem Schwellenwert liegt, werden verworfen,
   - die Übertragungseigenschaften des Funkkanals zu den Zeiten der Kanalimpulsantwort, zu denen die Betragswerte nicht verworfen wurden, werden erneut bestimmt, insbesondere mit einem Gaußschen Schätzverfahren, wobei das empfangene Signal mit einem abgespeicherten Signal mittels Autokorrelation verglichen wird und anschließend gefiltert wird, und damit werden die Nutzdatensignale rekonstruiert.

2. Verfahren nach Anspruch 1, **dadurch gekennzeichnet, daß** die Frequenz der Trainingsfolgen mindestens der maximal zulässigen Änderungsgeschwindigkeit der Übertragungseigenschaften entspricht.

3. Vorrichtung zum Empfang von Funksignalen über einen Funkkanal, wobei ein Empfänger (1) derart ausgestaltet ist, daß dieser die durch die Übertragungseigenschaften des Funkkanals veränderten Funksignale mittels einer Antenne (2) und eines Hochfrequenzempfangsteils (3) empfängt, wobei der Empfänger (1) derart ausgestaltet ist, daß dieser anhand von Trainingsfolgen mittels eines Kanalschätzers (5) die Übertragungseigenschaften des Funkkanals schätzt, wobei der Empfänger (1) derart ausgestaltet ist, daß dieser Nutzdatensignale mittels eines Datendetektors (6) detektiert, wobei der Empfänger (1) anhand von Synchronisationssignalen den Beginn der Trainingsfolgen und Nutzdatensignale erkennt, **dadurch gekennzeichnet, daß** der Empfänger (1) derart ausgestaltet ist, daß dieser durch einen ersten Vergleich der Trainingsfolgen eine Anzahl der Betragswerte der Kanalimpulsantwort mittels eines Kanal- und Längenschätzers (4) ermittelt, wobei der Kanal- und Längenschätzer (4) derart ausgestaltet ist, daß dieser die Anzahl durch die abgespeicherte maximale zeitliche Länge der Kanalimpulsantwort bestimmt, daß der Kanal- und Längenschätzer (4) derart ausgestaltet ist, daß dieser eine Mittelung der Betragswerte mehrerer Vergleiche durchführt, daß der Kanal- und Längenschätzer (4) derart ausgestaltet ist, daß dieser die gemittelten Betragswerte mit einem vorgegebenen Schwellenwert für den Betrag vergleicht und die gemittelten Betragswerte, die unter dem Schwellenwert liegen und die am zeitlichen Ende der Kanalimpulsantwort liegen und die aufeinander folgen und auf die kein Betragswert folgt, der über dem Schwellenwert liegt, verwirft, daß der Empfänger (11) derart ausgestaltet ist, daß dieser die Übertragungseigenschaften des Funkkanals für die neu bestimmte zeitliche Länge der Kanalimpulsantwort erneut mittels des Kanalschätzers (5) bestimmt, insbesondere mit einem Gaußschen Schätzverfahren, und daß der Empfänger derart ausgestaltet ist, daß dieser (1) damit die empfangenen Nutzdatensignale im Datendetektor (6) rekonstruiert.

4. Vorrichtung nach Anspruch 3, **dadurch gekennzeichnet, daß** die Vorrichtung als Mobilstation ausgebildet ist.

5. Vorrichtung nach Anspruch 3, **dadurch gekennzeichnet, daß** die Vorrichtung als Basisstation ausgebildet ist.

**Claims**

1. Method for receiving radio signals via a radio channel, where the radio signals are altered by attenuation, delay times and phase shifting in the radio channel, where the radio signals have training sequences, synchronization signals and useful data signals, where the synchronization signals are used to identify the start of the training sequences and useful data signals, and where the transmission properties of the radio channel are ascertained by comparing received training sequences with stored training sequences, **characterized by** the following steps:

   - a first comparison, particularly using a signal-matched filter where the received signal is compared with a stored signal, of the training sequences ascertains a number of magnitude values for the channel impulse response, the number being prescribed by a prescribed maximum length of the channel impulse response,
   - the magnitude values are averaged over a plurality of comparisons,
   - the magnitude values of the channel impulse response are compared with a prescribed threshold value for the magnitude, and the magnitude values which are below the threshold value and which are at the end of the channel impulse response's time and which succeed one another and which are not followed by a magnitude value that is above the threshold value are rejected,
   - the transmission properties of the radio channel at the channel impulse response's times at which the magnitude values have not been rejected are determined again, particularly using a Gaussian estimation method, with the received signal being compared with a stored signal by means of autocorrelation and then filtered, and these are used to reconstruct the useful data signals.

2. Method according to Claim 1, **characterized in that** the frequency of the training sequences corresponds at least to the maximum permissible speed of change of the transmission properties.

3. Apparatus for receiving radio signals via a radio channel, where a receiver (1) is designed such that it receives the radio signals altered by the transmission properties of the radio channel using an antenna (2) and a radio-frequency reception part (3), where the receiver (1) is designed such that it uses a channel estimator (5) to estimate the transmission properties of the radio channel from training sequences, where the receiver (1) is designed such that it detects useful data signals using a data detector (6), and where the receiver (1) uses synchronization signals to identify the start of the training sequences and useful data signals, **characterized in that** the receiver (1) is designed such that it performs a first comparison of the training sequences to ascertain a number of magnitude values for the channel impulse response using a channel and length estimator (4), where the channel and length estimator (4) is designed such that it determines the number from the stored maximum length of the channel impulse response's time, **in that** the channel and length estimator (4) is designed such that it averages the magnitude values for a plurality of comparisons, **in that** the channel and length estimator (4) is designed such that it compares the averaged magnitude values with a prescribed threshold value for the magnitude and rejects the averaged magnitude values which are below the threshold value and which are at the end of the channel impulse response's time and which succeed one another and which are not followed by a magnitude value that is above the threshold value, **in that** the receiver (1) is designed such that the transmission properties of the radio channel are determined again for the newly determined length of the channel impulse response's time using the channel estimator (5), particularly using a Gaussian estimation method, and **in that** the receiver (1) is designed such that it uses these to reconstruct the received useful data signals in the data detector (6).

4. Apparatus according to Claim 3, **characterized in that** the apparatus is in the form of a mobile station.

5. Apparatus according to Claim 3, **characterized in that** the apparatus is in the form of a base station.

**Revendications**

1. Procédé de réception de signaux radio par un canal radio, les signaux radio étant modifiés par atténuation, par des temps de retardement et par un déphasage du canal radio, les signaux radio présentant des séquences d'apprentissage, des signaux de synchronisation et des signaux de données utiles, les signaux de synchronisation servant à identifier le début des séquences d'apprentissage et des signaux de données utiles, les propriétés de transmission du canal radio étant déterminées par une comparaison de séquences d'apprentissage reçues avec des séquences d'apprentissage mémorisées,
   **caractérisé par**
   les étapes suivantes :

   - par une première comparaison des séquences d'apprentissage, notamment au moyen d'un filtre adapté au signal, le signal reçu étant comparé avec un signal mémorisé, on détermine un certain nombre des valeurs de la réponse d'impulsion du canal, le nombre étant prédéterminé par une longueur maximale prédéterminée de la réponse d'impulsion du canal,
   - on calcule la moyenne des valeurs sur plusieurs comparaisons,
   - on compare les valeurs de la réponse d'impulsion du canal à une valeur de seuil prédéterminée pour le total et on rejette les valeurs inférieures à la valeur de seuil, situées à la fin du temps de la réponse d'impulsion du canal et qui se succèdent sans être suivies d'une valeur supérieure à la valeur de seuil,
   - les propriétés de transmission du canal radio sont de nouveau déterminées aux instants de la réponse d'impulsion du canal auxquels les valeurs n'ont pas été rejetées, en particulier avec un procédé d'évaluation gaussien, le signal reçu étant comparé avec un signal mémorisé par autocorrélation puis filtré, les signaux de données utiles étant ainsi reconstruits.

2. Procédé selon la revendication 1,
   **caractérisé en ce que**
   la fréquence des séquences d'apprentissage correspond au moins à la vitesse de variation maximale admissible des propriétés de transmission.

3. Dispositif de réception de signaux radio par un canal radio, un récepteur (1) étant configuré pour recevoir les signaux radio modifiés par les propriétés de transmission du canal radio, au moyen d'une antenne de réception (2) et d'une partie de réception à haute fréquence (3), le récepteur (1) pouvant estimer les propriétés de transmission du canal radio au moyen d'un estimateur de canal (5) en s'appuyant sur des séquences d'apprentissage, détecter des signaux de données utiles au moyen d'un détecteur de données (6), en identifiant le début des séquences d'apprentissage et des signaux de données utiles en s'appuyant sur des signaux de synchronisation,
   **caractérisé en ce que**
   le récepteur (1) peut déterminer, par une première comparaison des séquences d'apprentissage, un certain nombre de valeurs de la réponse d'impulsion du canal au moyen d'un estimateur de canal et de longueur (4), l'estimateur de canal et de longueur (4) étant configuré pour déterminer le nombre par la longueur temporelle maximale mémorisée de la réponse d'impulsion du canal, l'estimateur de canal et de longueur (4) peut calculer une moyenne des valeurs de plusieurs comparaisons, comparer les valeurs moyennes avec une valeur de seuil prédéterminée pour la valeur et rejeter les valeurs moyennes inférieures à la valeur de seuil, qui se succèdent sans être suivies d'aucune valeur supérieure à la valeur de seuil, le récepteur (1) détermine à nouveau au moyen de l'estimateur de canal (5) les propriétés de transmission du canal radio pour la longueur temporelle nouvellement déterminée de la réponse d'impulsion du canal, en particulier avec un procédé d'estimation gaussien, et le récepteur (1) reconstruit les signaux de données utiles dans le détecteur de données (6).

4. Dispositif selon la revendication 3,
   **caractérisé en ce que**
   le dispositif est une station mobile.

5. Dispositif selon la revendication 3,
   **caractérisé en ce que**
   le dispositif est une station de base.

FIG. 1

FIG. 2